# FASCICULE DE BREVET EUROPEEN

(11) **EP 2 506 962 B1**
(45) Date de publication et mention de la délivrance du brevet: **13.08.2014**
(21) Numéro de dépôt: 10805266.3
(22) Date de dépôt: 24.11.2010
(51) Int. Cl.: B01J 8/04, B01J 19/24, B01J 35/04, C04B 38/06

(54) **RÉACTEUR CATALYTIQUE COMPRENANT UNE ZONE ALVÉOLAIRE DE MACROPOROSITÉ ET MICROSTRUCTURE CONTRÔLÉES ET UNE ZONE À MICROSTRUCTURE STANDARD**
KATALYTISCHER REAKTOR MIT EINEM ZELLBEREICH MIT GESTEUERTER MAKROPORÖSITÄT UND GESTEUERTER MIKROSTRUKTUR SOWIE EINEM BEREICH MIT EINER STANDARDMIKROSTRUKTUR
CATALYTIC REACTOR INCLUDING ONE CELLULAR AREA HAVING CONTROLLED MACROPOROSITY AND A CONTROLLED MICROSTRUCTURE AND ONE AREA HAVING A STANDARD MICROSTRUCTURE

(30) Priorité: 01.12.2009 FR 0958554
(43) Date de publication de la demande: 10.10.2012
(73) Titulaire: L'Air Liquide Société Anonyme pour l'Etude et l'Exploitation des Procédés Georges Claude, 75007 Paris (FR)
(72) Inventeur: DEL-GALLO, Pascal, F-91410 Dourdan (FR); GARY, Daniel, F-78180 Montigny Le Bretonneux (FR); CORNILLAC, Mathieu, F - 97434 St. Gilles Les Bains (FR); CUNI, Aude, F-60596 Frankfurt (FR)
(74) Mandataire: Beroud, Amandine
(86) Numéro de dépôt international: PCT/FR2010/052504
(87) Numéro de publication internationale: WO 2011/067509

(56) Documents cités:
- EP-A1- 1 216 751
- WO-A1-2009/138432
- GB-A- 2 423 489

## Description

La présente invention a pour objet un réacteur catalytique comprenant au moins une architecture comprenant une mousse céramique ou métallique catalytique de macroporosité contrôlé et microstructure contrôlée, et au moins une architecture standard. Il est entendu par architecture standard les architectures classiquement mises en oeuvre par les fabricants de catalyseurs, à savoir des barillets, des bâtonnets, des billes, des comprimés, ...

Les performances des réacteurs catalytiques à lit fixe, et en particulier des réacteurs de réformage à la vapeur, sont directement liées à la structure du lit catalytique. On entend par structure du lit catalytique l'empilement des catalyseurs d'architecture identique ou différente (barillets, sphères, bâtonnets, ...) dans le réacteur industriel associé. Les structures alvéolaires ne sont pas actuellement développées au niveau industriel. On citera comme exemple les différents empilements dans les réacteurs de Water-Gas-Shit (réacteur intervenant dans la réaction du gaz à l'eau) (lits catalytiques successifs d'architecture identique mais de microstructure différente), Dans ces cas de figure une structure de lit catalytique contenue dans un réacteur industriel peut être l'empilement successif d'un volume A de catalyseur, d'un volume B de catalyseur et d'un volume C de catalyseur. A, B, et C se différencient soit par leur(s) architecture(s) (forme géométrique, porosité d'empilement, ...), soit par leur(s) microstructure(s) (formulation chimique, taille des micropores, taille et distributions des phases actives, ...), soit par leur(s) architecture(s)/microstructure(s). Généralement l'architecture standard des lits catalytiques est constituée de barillets comprenant un ou plusieurs trous, de pilules, de bâtonnets, de sphères, ...

A titre d'exemple, le document GB-A-2 423 489 décrit deux architectures alvéolaires en série utilisées entre autre pour la production d'hydrogène. Les deux architectures alvéolaires sont faites de mousses ayant une couche catalytique.

Une structure de lit catalytique performante doit à la fois :
- présenter un rapport surface/volume maximal (m²/m³), afin d'augmenter la surface géométrique d'échange et donc indirectement l'efficacité catalytique,
- améliorer la densité du remplissage d'un tube par rapport à un remplissage aléatoire induit par les structures conventionnelles (sphère, pellet, cylindre, barillets...),
- minimiser des pertes de charge le long du lit (entre l'entrée et la sortie du réacteur catalytique),
- assurer un transfert de chaleur d'une efficacité maximale axiale et/ou radiale accrue. On entend par axial le long de l'axe du réacteur catalytique, et par radial de la paroi interne ou externe du réacteur catalytique au centre du lit catalytique,
- satisfaire les contraintes thermomécaniques et/ou thermochimiques supportées par le lit.

La structuration globale d'un réacteur catalytique à lit fixe est un « phénomène » multi-échelles :
- La microstructure du matériau (catalyseur) lui-même, à savoir sa formulation chimique, la micro et/ou méso-porosité, la taille et la dispersion de(s) phase(s) active(s), l'épaisseur du(des) dépôt(s), ...
- L'architecture du catalyseur, c'est-à-dire sa forme géométrique (granulés, barillets, monolithes en nids d'abeille, structures alvéolaires de type mousse, sphères, pilules, bâtonnets, ...),
- La structure du lit au sein du réacteur (empilement successifs de plusieurs volumes de matériaux catalytiques différents soit en termes de microstructure, soit en termes d'architecture, soit des deux), c'est-à-dire l'agencement des matériaux catalytiques d'architecture et/ou de microstructure contrôlée(s) au sein du réacteur catalytique. Il peut être envisagé par exemple comme structure de lit(s) catalytique(s) des empilements successifs additionnés ou non d'éléments non catalytiques de fonctionnalités variées.

Partant de là, un problème qui se pose est de fournir un réacteur catalytique présentant des performances améliorées.

Une solution de la présente invention est un réacteur catalytique comprenant :
- au moins une première architecture-microstructure (1) comprenant :
   ∘ une architecture alvéolaire céramique et/ou métallique avec une taille de pore, exprimée en mm, comprise entre 0,3175 mm et 12,7 mm de diamètre moyen [entre 2 et 80 ppi (pore per inch en langue anglaise)] et une macroporosité supérieure à 85%, et une microstructure ayant une taille de grain comprise entre 100 nm et 5 µm, préférentiellement entre 200 nm et 3 µm et une densification du squelette supérieure à 95% ; et
   ∘ une couche catalytique
- au moins une deuxième architecture/microstructure (2) comprenant
   ∘ une architecture de forme géométrique sphérique ou cylindrique avec une taille de pore comprise entre 0,1 et 100 µm et une macroporosité inférieure à 60%, et une microstructure ayant une taille de grain comprise entre 20 nm et 10 µm, préférentiellement entre 0,5 et 5µm et une densification du squelette comprise entre 20 et 90%, préférentiellement entre 50 et 80% ; et
   ∘ une couche catalytique

la première et la deuxième architecture-microstructure étant empilées au sein dudit réacteur.

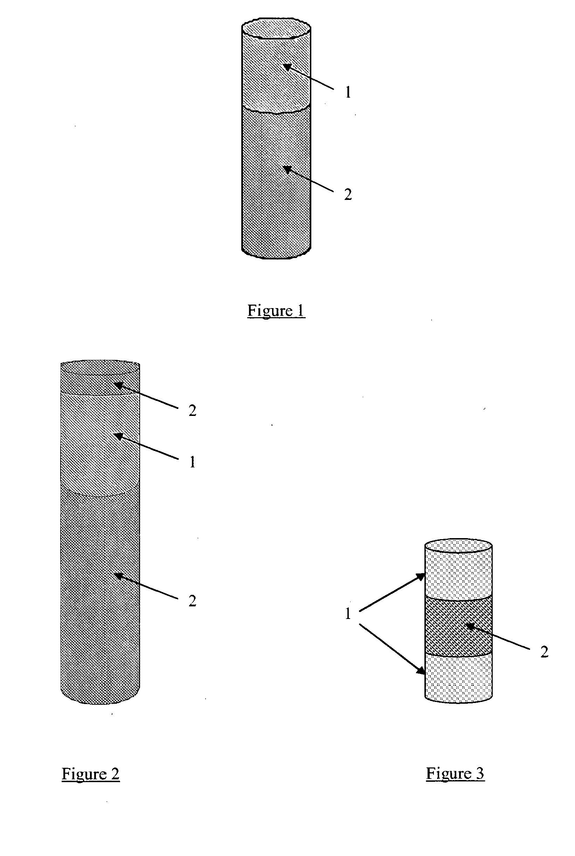

La Figure 1 représente l'empilement des deux architectures. Il est à noter que la hauteur relative des différentes architectures est indicative uniquement.

La densification du squelette céramique et/ou métallique est mesurée de préférence par microscopie électronique à balayage (MEB) ou par poussée d'archimède.

Par taille de pore, on entend le volume microporeux développé par le squelette céramique et/ou métallique. Généralement ce volume microporeux dans le cadre des architectures alvéolaires céramiques et/ou métallique est très faible (pas de développement de micro et méso-porosité spécifique) et inférieur à 0,1 g/cm³. Ceci induit une absence de micro et méso-porosité. La porosité existante est une macroporosité liée à l'empilement des particules céramiques formant l'architecture alvéolaire. Dans le cas des squelettes céramiques et/ou métalliques la densification étant supérieure à 95 % la macroporosité résiduelle est essentiellement fermée contrairement à une architecture/microstructure standard d'un support catalytique type barillet, pilule, bâtonnet, ...

Par taille de grain, on entend notamment les grains élémentaires de céramique de taille comprise entre 100 nm et 5 microns, préférentiellement entre 200 nm et 3 µm, la taille correspondant au diamètre du grain.

L'architecture alvéolaire catalytique est de préférence une mousse céramique ou métallique catalytique. Il est entendu par catalytique la présence en surface de l'architecture alvéolaire d'un catalyseur.

Les mousses en céramique voire en alliage métallique sont connues pour être utilisées comme support de catalyseur pour les réactions chimiques, en particulier les réactions de catalyse hétérogène. Ces mousses sont particulièrement intéressantes pour des réactions fortement exo- ou endo- thermiques (ex : réaction exothermique de Fischer-Tropsch, réaction du gaz à l'eau (réaction de water-gas-shift), réaction d'oxidation partielle, réaction de méthanation...), et/ou pour des réacteurs catalytiques où l'on cherche à obtenir des vitesses spatiales élevées (réaction de vaporeformage du gaz naturel, du naphta, GPL ...).

L'empilement des architectures au sein du réacteur catalytique selon l'invention permet de conjuguer la performance des mousses catalytiques en matière de rapport surface/volume élevé, de transfert de chaleur efficace, de limitation des pertes de charge et de satisfaction des contraintes thermomécaniques et/ou thermochimiques, avec des catalyseurs « standards » aux performances moindres mais au coût potentiellement plus faible.

Selon le cas, le réacteur selon l'invention peut présenter une ou plusieurs des caractéristiques suivantes :
- la première architecture-microstructure (1) est comprise entre 2 deuxièmes architectures-microstructures (2). Cet empilement permet d'éviter d'éventuels écoulements préférentiels entre les parois du réacteur et la première architecture-microstructure. La Figure 2 représente l'empilement des 3 architectures ;
- la deuxième architecture-microstructure (2) est comprise entre 2 premières architectures-microstructures (1) ; de préférence une de ces 2 premières architectures-microstructures est située côté entrée du gaz à traiter et l'autre est située côté sortie du gaz produit. En effet, la zone côté sortie du gaz produit est soumise à de plus fortes températures, et si l'architecture alvéolaire céramique et/ou métallique présente des propriétés thermomécaniques supérieures à l'architecture de forme géométrique sphérique ou cylindrique, cet empilement d'architectures peut permettre d'optimiser la résistance globale de l'empilement des architectures. La Figure 3 représente l'empilement des 3 architectures ;
- chaque architecture peut être divisée en au moins 2 sous-architectures de macroporosité et /ou microporosités différentes ;
- l'architecture alvéolaire céramique et/ou métallique comprend au moins un gradient de porosité continu et/ou discontinu, radial et/ou axial sur l'ensemble de ladite architecture ;
- ledit réacteur comprend une entrée du gaz à traiter et une sortie du gaz produit et la première architecture-microstructure (1) est placée du côté entrée du gaz à traiter. En effet, c'est là où l'on cherche l'activité catalytique volumique la plus élevée, et un transfert de chaleur radial maximal afin de diminuer les gradients de température radiaux qui sont plus marqués du côté entrée du gaz à traiter ;
- la deuxième architecture-microstructure est constituée de barillets, de granulés, de poudres, de sphères, de bâtonnets, de pilules ou d'un mélange de ces éléments.

Il est à noter que dans les Figures 2 et 3, la hauteur relative des différentes architectures est indicative uniquement.

Les architectures alvéolaires sont fabriquées à partir d'une matrice en matériau polymérique choisi parmi le poly(uréthane) (PU), le poly(chlorure de vinyle) (PVC), le polystyrène (PS), la cellulose et le latex, mais le choix idéal de la mousse est limité par de sévères exigences.

Le matériau polymérique ne doit pas libérer des composés toxiques, par exemple le PVC est évité car il peut entrainer la libération de chlorure d'hydrogène.

L'architecture alvéolaire catalytique lorsqu'elle est de nature céramique comprend typiquement des particules inorganiques choisies parmi l'alumine(Al₂O₃) et/ou l'alumine dopée (La (1 à 20 % en poids)-Al₂O₃, Ce (1 à 20 wt.% en poids)-Al₂O₃, Zr (1 à 20 % en poids)-Al₂O₃), la magnésie (MgO), le spinelle (MgAl₂O₄), les hydrotalcites, CaO, les silicocalcaires, les silicoalumineux, l'oxyde de zinc, la cordiérite, la mullite, le titanate d'aluminium, et le zircon (ZrSiO₄) ; ou des particules céramiques choisies parmi la cérine (CeO₂), le zirconium (ZrO₂) la cérine stabilisée (GdzO₃ entre 3 et 10 mol% en cérine) et le zirconium stabilisé (Y₂O₃ entre 3 et 10 mol% en zirconium) et les oxydes mixtes de formule (I):

Ce₍₁₋ₓ₎ Zrₓ O_{(2-δ)} (I),

où 0 < x < 1 et δ assure la neutralité électrique de l'oxyde,
ou les oxydes mixtes dopés de formule (II):

Ce_{(1-x-y)} Zrₓ Dy O_{2-δ} (II),

où D is choisi parmi le Magnésium (Mg), l'Yttrium (Y), le Strontium (Sr), le Lanthanum (La), le Presidium (Pr), le Samarium (Sm), le Gadolinium (Gd), l'Erbium (Er) ou l'Ytterbium (Yb); où 0 < x < 1, 0< y <0;5 et δ assure la neutralité électrique de l'oxyde.

Le réacteur catalytique selon l'invention peut-être utilisé pour produire des produits gazeux, en particulier un gaz de synthèse.

Le gaz d'alimentation comprend de préférence de l'oxygène, du dioxyde de carbone ou de la vapeur d'eau mélangé à du méthane. Toutefois ces structures de lits catalytiques peuvent être déployées sur tous les réacteurs catalytiques du procédé de production d'hydrogène par vaporeformage, à savoir notamment les lits de pré reformage, de reformage et de water-gas-shift (réaction du gaz à l'eau).

Les températures de réaction qui sont employées sont élevées et sont comprises entre 200 et 1000°C, de préférence entre 400°C et 1000°C.

La pression des réactifs (CO, H₂, CH₄, H₂O, CO₂, ...) peut être comprise entre 10 et 50 bars, préférentiellement entre 15 et 35 bars.

## Revendications

1. Réacteur catalytique comprenant :
- au moins une première architecture-microstructure (1) comprenant :
∘ une architecture alvéolaire céramique et/ou métallique avec une taille de pore, exprimée en mm, comprise entre 0,3175 mm et 12,7 mm de diamètre moyen [entre 2 et 80 ppi (pore per inch en langue anglaise)] et une macroporosité supérieure à 85%, et une microstructure ayant une taille de grain comprise entre 100 nm et 5 microns, et une densification du squelette supérieure à 95% ; et
∘ une couche catalytique
- au moins une deuxième architecture/microstructure (2) comprenant
∘ une architecture de forme géométrique sphérique ou cylindrique avec une taille de pore comprise entre 0,1 et 100 µm et une macroporosité inférieure à 60%, et une microstructure ayant une taille de grain comprise entre 20 nm et 10 µm et une densification du squelette comprise entre 20 et 90% ; et
∘ une couche catalytique
la première et la deuxième architecture-microstructure étant empilées au sein dudit réacteur.

2. Réacteur catalytique selon la revendication 1, **caractérisé en ce que** la première architecture-microstructure (1) est comprise entre 2 deuxièmes architectures-microstructures (2).

3. Réacteur catalytique selon la revendication 1, **caractérisé en ce que** la deuxième architecture-microstructure (2) est comprise entre 2 premières architectures-microstructures (1).

4. Réacteur catalytique selon l'une des revendications 1 à 3, **caractérisé en ce que** chaque architecture peut être divisée en au moins 2 sous-architectures de macroporosité et /ou microporosités différentes.

5. Réacteur catalytique selon l'une des revendications 1 à 4, **caractérisé en ce que** l'architecture alvéolaire céramique et/ou métallique comprend au moins un gradient de porosité continu et/ou discontinu, radial et/ou axial sur l'ensemble de ladite architecture.

6. Réacteur catalytique selon l'une des revendications 1 à 5, **caractérisé en ce que** ledit réacteur comprend une entrée du gaz à traiter et une sortie du gaz produit et la première architecture-microstructure (1) est placée du côté entrée du gaz à traiter.

7. Réacteur catalytique selon l'une des revendications 1 à 6, **caractérisé en ce que** la deuxième architecture-microstructure est constituée de barillets, de granulés, de poudres, de sphères, de bâtonnets, de pilules ou d'un mélange de ces éléments.

8. Utilisation du réacteur catalytique tel que défini dans l'une des revendications 1 à 7 pour produire du gaz.

9. Utilisation selon la revendication 8, **caractérisé en ce que** le gaz est du gaz de synthèse.

## Patentansprüche

1. Katalytischer Reaktor, umfassend:
- mindestens eine erste Mikrostruktur-Architektur (1), umfassend:
∘ eine keramische und/oder metallische wabenförmige Architektur mit einer Porengröße, deren mittlerer Durchmesser, ausgedrückt in mm, zwischen 0,3175 mm und 12,7 mm beträgt, [zwischen 2 und 80 ppi (auf Englisch Pore pro Inch)] und einer Makroporosität, die größer als 85 % ist, und einer Mikrostruktur, die eine Korngröße zwischen 100 nm und 5 µm hat, und einer Skelettverdichtung, die größer als 95 % ist; und
∘ eine katalytische Schicht
- mindestens eine zweite Mikrostruktur-Architektur (2), umfassend:
∘ eine Architektur mit einer kugelförmigen oder zylindrischen geometrischen Form mit einer Porengröße, die zwischen 0,1 und 100 µm beträgt, und einer Makroporosität, die kleiner als 60 % ist, und einer Mikrostruktur, die eine Korngröße zwischen 20 nm und 10 µm hat, und einer Skelettverdichtung, die zwischen 20 und 90 % beträgt; und
∘ eine katalytische Schicht
wobei die erste und die zweite Mikrostruktur-Architektur in dem Reaktor aufeinandergestapelt sind.

2. Katalytischer Reaktor nach Anspruch 1, **dadurch gekennzeichnet, dass** die erste Mikrostruktur-Architektur (1) zwischen 2 zweiten Mikrostruktur-Architekturen (2) liegt.

3. Katalytischer Reaktor nach Anspruch 1, **dadurch gekennzeichnet, dass** die zweite Mikrostruktur-Architektur (2) zwischen 2 ersten Mikrostruktur-Architekturen (1) liegt.

4. Katalytischer Reaktor nach einem der Ansprüche 1 bis 3, **dadurch gekennzeichnet, dass** jede Architektur in mindestens 2 Unterarchitekturen unterschiedlicher Makroporosität und/oder Mikroporositäten unterteilt ist.

5. Katalytischer Reaktor nach einem der Ansprüche 1 bis 4, **dadurch gekennzeichnet, dass** die keramische und/oder metallische wabenförmige Architektur über die Gesamtheit der Architektur einen radialen und/oder axialen, kontinuierlichen oder diskontinuierlichen Porositätsgradienten umfasst.

6. Katalytischer Reaktor nach einem der Ansprüche 1 bis 5, **dadurch gekennzeichnet, dass** der Reaktor einen Einlass für das aufzubereitende Gas und einen Auslass für das hergestellte Gas umfasst und die erste Mikrostruktur-Architektur (1) auf der Seite des Einlasses für das aufzubereitende Gas angeordnet ist.

7. Katalytischer Reaktor nach einem der Ansprüche 1 bis 6, **dadurch gekennzeichnet, dass** die zweite Mikrostruktur-Architektur aus Trommeln, Granulat, Pulver, Kugeln, Stäbchen, Tabletten oder aus einer Mischung dieser Elemente besteht.

8. Verwendung des katalytischen Reaktors wie in einem der Ansprüche 1 bis 7 zur Herstellung von Gas.

9. Verwendung nach Anspruch 8, **dadurch gekennzeichnet, dass** das Gas Synthesegas ist.

## Claims

1. Catalytic reactor comprising
- at least one first architecture/microstructure (1) comprising
∘ a ceramic and/or metal cellular architecture having a mean pore diameter size, expressed in mm, of between 0.3175 mm and 12.7 mm [between 2 and 80 pores per inch (ppi)] and a macroporosity of greater than 85 %, and a microstructure having a grain size of between 100 nm and 5 micrometres, and a densification of the skeleton of greater than 95 %; and
∘ a catalytic layer,
- at least one second architecture/microstructure (2) comprising
∘ an architecture having a spherical or cylindrical geometric form having a pore size of between 0.1 and 100 µm and a macroporosity of less than 60 %, and a microstructure having a grain size of between 20 nm and 10 µm and a densification of the skeleton of between 20 and 90 %, and
∘ a catalytic layer,
the first and the second architecture/microstructure being stacked within said reactor.

2. Catalytic reactor according to claim 1, **characterised in that** the first architecture/microstructure (1) is arranged between two second architectures/microstructures (2).

3. Catalytic reactor according to claim 1, **characterised in that** the second architecture/microstructure (2) is arranged between two first architectures/microstructures (1).

4. Catalytic reactor according to any of claims 1 to 3, **characterised in that** each architecture can be divided into at least two sub-architectures of different macroporosities and/or microporosities.

5. Catalytic reactor according to any of claims 1 to 4, **characterised in that** the ceramic and/or metal cellular architecture comprises at least one porosity gradient which is continuous and/or discontinuous, radial and/or axial over the entirety of said architecture.

6. Catalytic reactor according to any of claims 1 to 5, **characterised in that** said reactor has an inlet for the gas to be treated and an outlet for the gas produced, and the first architecture/microstructure (1) is positioned on the side having the inlet for the gas to be treated.

7. Catalytic reactor according to any of claims 1 to 6, **characterised in that** the second architecture/microstructure is formed by drums, granules, powders, spheres, rods, pills, or a mixture of these elements.

8. Use of the catalytic reactor according to any of claims 1 to 7 for producing gas.

9. Use according to claim 8, **characterised in that** the gas is syngas.
